**Europäisches Patentamt**

**European Patent Office**

**Office européen des brevets**

(19)

(11) Veröffentlichungsnummer : **0 121 106**
**B1**

(12)  **EUROPÄISCHE PATENTSCHRIFT**

(45) Veröffentlichungstag der Patentschrift :
29.07.87

(51) Int. Cl.⁴ : **B 65 G 47/76, B 65 G 47/68**

(21) Anmeldenummer : **84102168.6**

(22) Anmeldetag : **01.03.84**

(54) Vorrichtung zum Verteilen von Gegenständen auf zwei oder mehrere Abfuhrförderer.

(30) Priorität : **04.03.83 DE 3307757**

(43) Veröffentlichungstag der Anmeldung :
**10.10.84 Patentblatt 84/41**

(45) Bekanntmachung des Hinweises auf die Patenterteilung : **29.07.87 Patentblatt 87/31**

(84) Benannte Vertragsstaaten :
**AT BE CH DE FR GB IT LI NL SE**

(56) Entgegenhaltungen :
**EP-A- 0 066 142**
**CA-A- 1 014 893**
**DE-A- 2 801 387**

(73) Patentinhaber : **Heuft, Bernhard**
**Im Sonnenwinkel 14**
**D-5475 Burgbrohl (DE)**

(72) Erfinder : **Heuft, Bernhard**
**Im Sonnenwinkel 14**
**D-5475 Burgbrohl (DE)**

(74) Vertreter : **Abitz, Walter, Dr.-Ing. et al**
**Abitz, Morf, Gritschneder, Freiherr von Wittgenstein**
**Postfach 86 01 09**
**D-8000 München 86 (DE)**

## Beschreibung

Die Erfindung betrifft eine Vorrichtung zum Verteilen von Gegenständen von einem Zufuhrförderer auf zwei oder mehrere Abfuhrförderer in Abhängigkeit von bestimmten Merkmalen der Gegenstände mit einer Einrichtung zum wahlweisen Versetzen der Gegenstände quer zur Förderrichtung, wobei die Abfuhrförderer im wesentlichen waagrechte, sich bewegende Förderflächen aufweisen.

Eine derartige Vorrichtung ist aus der DE-OS 28 01 387 bekannt und kann z. B. bis zu etwa 50 000 Flaschen pro Stunde sortieren. Die Fördergeschwindigkeit beträgt hierbei etwa 1 m/sec.. Bei einer weiteren Steigerung der Fördergeschwindigkeit ergibt sich bei relativ wenig standfesten Gegenständen wie Getränkeflaschen die Gefahr des Umkippens oder müssen die Gegenstände auf einer sehr flachen Ablenkkurve auf die beiden Abfuhrförderer verteilt werden, wodurch die Baulänge der Vorrichtung übermässig gross wird und auch der mechanische Aufwand steigt. Bei der mit Ablenksegmenten arbeitenden bekannten Vorrichtung wird durch die körperliche Berührung zwischen den Flaschen und den Ablenksegmenten die Fördergeschwindigkeit zusätzlich beschränkt, da bei hohen Fördergeschwindigkeiten die Flaschen durch diese Berührung in Drehung versetzt oder zu stark abgebremst werden.

Aus der CA-PS 1 014 893 ist eine Vorrichtung zum Verteilen von nach einem bestimmten Merkmal ausgewählten Gegenständen bekannt. Die Gegenstände, z. B. Dosen, werden hierbei auf zwei parallel laufenden Seilen oder Schläuchen stehend zugeführt und durch seitliche Geländer gestützt. Alle Dosen werden dann zunächst nach einer Seite gekippt, so dass sie nur noch auf einem der beiden Seile oder Schläuche stehen. Die ausgewählten Dosen werden dann durch einen von unten angreifenden Pusher gekippt, so dass sie nur noch auf dem anderen der beiden Seile oder Schläuche stehen. Der Weg der beiden Seile oder Schläuche gabelt sich sodann, wodurch die Dosen verschiedene Wege nehmen. Nachteilig ist hierbei, dass eine besondere Art von Zufuhr- und von Abfuhrförderer erforderlich ist. Die Fördergeschwindigkeit wird ausserdem dadurch beschränkt, dass die Dosen im gekippten Zustand vom Geländer gestützt werden. Durch ein mitlaufendes Geländer könnte dieser Nachteil zwar behoben werden, würde jedoch der mechanische Aufwand erheblich erhöht.

Aus der EP-A-66 142 ist eine Vorrichtung zum Aufteilen eines Stroms von Gegenständen in zwei Ströme bekannt. Die Gegenstände werden dabei am Anfang einer Rutsche mit dachartig geneigter Fläche bekannt. Am Anfang der Rutsche werden die Gegenstände, bei denen es sich um relativ flache Gegenstände handeln muß, durch von oben kommende Luftstrahlen auf die eine oder andere Seite gekippt. Die bekannte Vorrichtung ist nicht für relativ hohe Gegenstände, z. B.

Flaschen geeignet. Da sie nur der Verdoppelung eines Warenstromes dient, ist eine zuverlässige Zuordnung eines Gegenstandes zu einem der beiden Abfuhrförderer offensichtlich nicht erforderlich.

Die Erfindung, wie sie im Anspruch 1 angegeben ist, löst die Aufgabe, mit einfachen Mitteln auch labile Gegenstände wie Flaschen oder dergleichen mit sehr hoher Geschwindigkeit auf zwei Abfuhrförderer zu verteilen.

Die im wesentlichen waagrechte, sich bewegende Förderfläche kann insbesondere durch Gliederkettenförder und Förderbänder gebildet werden. Es ist dabei zweckmäßig, wenn diese eine solche Breite haben, daß die Gegenstände ohne Hilfe eines Geländers oder sonstige seitliche Stützeinrichtungen auf ihnen stehen können.

Der Zufuhrförderer kann von beliebiger Bauart sein, solange er in der Lage ist, die Gegenstände in der gewünschten aufrechten Stellung zuzuführen. Zweckmässig ist es, wenn der Zufuhrförderer von der gleichen Bauart wie die Abfuhrförderer ist und wenn ein und derselbe Förderer oberhalb der Versetzeinrichtung als Zufuhrförderer und unterhalb der Versetzeinrichtung als einer der Abfuhrförderer fungiert.

Das Zuführen der Gegenstände derart, dass sie auf beiden Abfuhrförderern zu stehen kommen, kann in einfacher Weise durch zwei Schwammgummirollen oder -walzen erreicht werden, die mit senkrechter Drehachse so angeordnet sind, dass ihr Spalt gleich der Querabmessung der Gegenstände ist und zwischen beide Abfuhrförderer, bzw. zu gleichen Teilen auf beide Abfuhrförderer fällt. Eine andere Möglichkeit besteht darin, durch geeignete Führungsschienen oder Führungsgeländer die Gegenstände in dieser Weise zuzuführen.

Die Einrichtung zum Versetzen der Gegenstände quer zur Förderrichtung kann eine Ablenkklappe, ein ausfahrbarer Stössel, eine aus einem oder mehreren Segmenten bestehende Ablenkvorrichtung der in der DE-OS 28 01 387 beschriebenen Bauart oder eine Ablenkgasdüse, eine Saugdüse oder eine magnetische oder elektrische Ablenkeinrichtung sein. Die Versetzeinrichtung braucht die Gegenstände nur geringfügig zu versetzen, nämlich soweit, dass der Schwerpunkt der Gegenstände eindeutig auf denjenigen der beiden Abfuhrförderer fällt, der den Weitertransport des Gegenstandes übernehmen soll. Hierzu genügt es, den Gegenständen einen geringfügigen Stoss oder Impuls quer zur Förderrichtung zu geben. Dadurch, dass die Versetzeinrichtung die Gegenstände also nicht vollständig von einem Förderer auf den anderen zu verschieben braucht, ist die Gefahr eines Umkippens labiler Gegenstände, wie Flaschen, Dosen und dergleichen mit relativ kleiner Standfläche entsprechend geringer und kann demgemäss die Fördergeschwindigkeit wesentlich erhöht werden.

Selbstverständlich muss dafür gesorgt werden, dass die Gegenstände letzten Endes etwa auf der Mitte des jeweiligen Abfuhrförderers zu stehen kommen. Dazu sind die Abfuhrförderer unterhalb der Versetzeinrichtung, d. h. bewegungsabwärts von der Versetzeinrichtung dachartig gegeneinander gekippt, so dass die aneinandergrenzenden Ränder der Abfuhrförderer überhöht sind. Im allgemeinen genügt ein geringfügiger Kippwinkel von wenigen Grad, z. B. 5 bis 10 Grad. Der geeignete Kippwinkel und der Übergang aus der Waagerechten in denselben hängt von der Standfestigkeit der Gegenstände, der Fördergeschwindigkeit und der Reibung zwischen den Standflächen der Gegenstände und den Abführförderern ab.

Bei der in Anspruch 2 angegebenen Ausführungsform werden die Gegenstände so zugeführt, dass ihr Schwerpunkt möglichst genau zwischen die beiden aneinandergrenzenden Abfuhrförderer fällt. Je nachdem, auf welchem Abfuhrförderer ein Gegenstand weitertransportiert werden soll, verschiebt die Versetzeinrichtung den Gegenstand dann in der einen oder in der anderen Richtung quer zur Förderrichtung. Hierbei wird also jedem Gegenstand ein Impuls oder Stoss quer zur Förderrichtung erteilt. Da dieser Impuls oder Stoss sehr gering sein kann, ermöglicht diese Ausführungsform besonders hohe Fördergeschwindigkeiten.

Ist zu erwarten, dass der grösste Anteil der Gegenstände auf dem ersten Abfuhrförderer weitertransportiert wird und nur ein sehr geringer Anteil auf den zweiten Abfuhrförderer zu verschieben ist, so ist es zweckmässig, die Gegenstände so zuzuführen, dass ihr Schwerpunkt von vornherein auf den Rand des ersten Abfuhrförderers fällt, so dass beim grösseren Anteil der Gegenstände die Versetzeinrichtung nicht in Tätigkeit tritt. Bei dem kleineren Anteil der Gegenstände, die auf dem zweiten Abfuhrförderer weitertransportiert werden sollen, muss dann jedoch ein etwas grösserer Impuls oder Stoss erteilt werden, da der Schwerpunkt dieser Gegenstände vom Randbereich des ersten Abfuhrförderers auf den des zweiten Abführförderers versetzt wird. Diese Ausführungsform ist Gegenstand des Anspruchs 3.

Die weitere Verschiebung der Gegenstände, so dass deren Schwerpunkt in etwa auf die Mitte der Abfuhrförderer fällt, erfolgt im wesentlichen selbsttätig durch die dachförmige Kippung der Abfuhrförderer, so dass sie eine Neigung quer zur Förderrichtung aufweisen. Das seitliche Verrutschen der Gegenstände kann dabei dadurch unterstützt werden, dass die Abfuhrförderer in diesem Bereich etwas vibrieren. Durch die Vibration der Abfuhrförderer können die Gegenstände die Haftreibung leichter überwinden und erreichen dadurch schon bei geringer seitlicher Kippung der Abfuhrförderer eine Position im Mittelbereich der Abfuhrförderer. Dies ist Gegenstand des Anspruches 4.

Eine weitere Ausführungsform beinhaltet, dass die dachartige Kippung der beiden Abfuhrförderer gegeneinander rein relativ ist, indem der erste Abfuhrförderer waagerecht liegt und nur der zweite Abfuhrförderer gekippt ist, so dass wiederum die Gegenstände gemäss der Lage ihres Schwerpunktes nur auf einem der beiden Abfuhrförderer zum Stehen kommen.

Die weitere Verschiebung erfolgt nur auf dem gekippten Abfuhrförderer, wie vorher beschrieben, wobei die Verschiebung so gross sein muss, dass die Bewegungsbahnen der verschobenen und der nicht verschobenen Gegenstände sich nicht mehr berühren. Danach wird der gekippte Abfuhrförderer wieder in die Waagerechte zurückgeführt, so dass die nicht verschobenen Gegenstände auf beiden Förderern zum Stehen kommen.

Dieser Zustand kann nun direkt Ausgangspunkt für eine weitere Aufteilung der Gegenstände sein (Mehrfachverteilung), oder die nicht verschobenen Gegenstände werden durch Führungseinrichtungen in etwa die Mitte des ersten Abfuhrförderers geführt.

Eine Dreifach-Verteilung kurzer Baulänge lässt sich nach dem oben beschriebenen Prinzip realisieren :

Anstatt zweimal hintereinander zu verteilen, werden einem waagerechten Zu- und Abfuhrförderer beidseitig gekippte Abfuhrförderer zugeordnet. Die Gegenstände werden mittig auf dem waagerechten Förderer zugeführt und durch eine Versetzeinrichtung nach vorher bestimmten Merkmalen jeweils soweit nach links oder rechts versetzt, dass ihr Schwerpunkt eindeutig auf dem jeweiligen gekippten Abfuhrförderer liegt ; nicht verschobenen Gegenstände laufen geradeaus.

Besonders günstig wird diese Ausführungsform, wenn man den mittleren waagerecht weiterlaufenden Förderer schmäler und die beiden Abfuhrförderer breiter als den Gegenstandsdurchmesser wählt, und somit den Schwerpunkt nur um einen kleinen Betrag nach links oder rechts versetzen muss.

Eine andere Möglichkeit zum Verschieben der Gegenstände in die Mitte der Abfuhrförderer besteht darin, dass man die Abfuhrförderer im gekippten Bereich auseinanderführt, so dass sich die Bewegungsbahnen der Gegenstände nicht mehr überlappen. Die Gegenstände können dann durch Führungseinrichtungen, wie Geländer, Schaumgummiwalzen und dergleichen vom Randbereich der Abfuhrförderer in deren Mitte versetzt werden. Diese Ausführungsform ist Gegenstand des Anspruches 5 und eignet sich insbesondere für sehr wenig standfeste Gegenstände, bei denen die Gefahr besteht, dass sie bei einem Abwärtsgleiten im gekippten Bereich der Abfuhrförderer umkippen könnten. Bei dieser Ausführungsform genügt es, wenn einer oder beide Abfuhrförderer soweit gekippt werden, dass die Gegenstände vom jeweils anderen Abfuhrförderer abgehoben werden. Der Kippwinkel muss also nicht so gross sein, dass sich die Gegenstände infolge der Schwerkraft seitlich in die Mitte des jeweiligen Abfuhrförderers verschieben.

Eine weitere Möglichkeit zum Verteilen der Gegenstände besteht darin, dass man die Abfuhrförderer im gekippten Bereich so weit auseinanderführt, so dass man einen oder mehrere neue Förderer dazwischen legen kann, die Abfuhrförderer zurückkippt und die Gegenstände auch auf dem bzw. den zusätzlichen Förderern zum Stehen kommen.

Besonders günstig ist dieses Verfahren für eine Mehrwegverteilung, indem man zwei zusätzliche Förderer einführt, auf denen die auseinandergeführten Gegenstände automatisch wieder in der, für eine weitere Aufteilung richtigen Position stehen. Über zusätzliche Versetzeinrichtungen wird dann eine weitere Verteilung initiiert.

Bei weniger labilen Gegenständen und wenn der Schwerpunkt eindeutig auf einem der beiden Abfuhrförderer liegt, ist es möglich, den oder die Abfuhrförderer bereits im Bereich der Versetzeinrichtung zu kippen.

Dies erlaubt z. B. kürzere Bauformen bei den Mehrfachverteilungen, da auf ein Zurückkippen verzichtet werden kann.

Die durch die Erfindung erzielbaren Vorteile bestehen neben der hohen zulässigen Fördergeschwindigkeit und der Möglichkeit, auch wenig standfeste Gegenstände, wie Getränkeflaschen, auf mehrere Abfuhrförderer zu verteilen, darin, dass die Gegenstände in beliebigem zeitlichen und räumlichen Abstand aufeinanderfolgen können, insbesondere auch ohne Abstand unmittelbar aufeinanderfolgen können. Ein wesentlicher Vorteil ist auch, dass der mechanische Aufwand denkbar gering ist, da als Zufuhr und Abfuhrförderer übliche Fördereinrichtungen, wie Gliederförderer, Transportbänder und dergleichen eingesetzt werden können. Die Versetzeinrichtung ist ebenfalls von bekannter Bauart.

Überraschend ist, dass die Gefahr eines Umkippens der Gegenstände beim Vorgang des Verteilens auf die beiden Abfuhrförderer gerade dadurch vermieden wird, dass die Abfuhrförderer geringfügig dachartig gegeneinander gekippt werden.

Ausführungsbeispiele der Erfindung werden nachfolgend anhand der Zeichnung näher erläutert. Es zeigen :

Figur 1 in Daraufsicht die wesentlichen Komponenten einer Vorrichtung zum Verteilen von auf einen Zufuhrförderer ankommenden Gegenständen auf einen von zwei Abfuhrförderern ;

Figur 2 einen Schnitt nach II-II von Fig. 1, wobei die dachartige Kippung der Abfuhrförderer gegeneinander erkennbar ist ;

Figur 3 eine Ausführungsform, bei der die Abfuhrförderer im gekippten Bereich voneinander weggeführt werden und

Figur 4 eine Ausführungsform zum Sortieren von Flaschen oder Dosen nach deren Durchmesser.

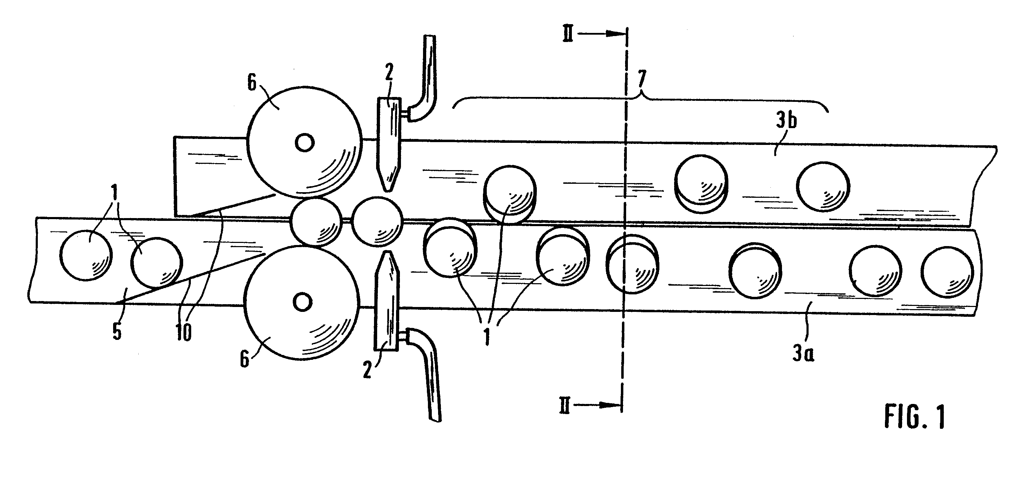

In Fig. 1 werden die Gegenstände 1 auf dem Zufuhrförderer 5, der aus kurzen, aneinander angelenkten Stahlgliedern besteht, herangeführt. Von dem Zufuhrförderer 5 werden die Gegenstände auf zwei Abfuhrförderer 3a, 3b verteilt, wobei sie zunächst durch Schaumgummiwalzen 6 auf der Grenzlinie zwischen beiden Abfuhrförderern 3a, 3b angeordnet werden und dann durch zwei Gasdüsen 2 von dieser Grenzlinie auf den Rand eines der beiden Abfuhrförderer 3a, 3b versetzt werden.

Die Schaumgummiwalzen 6 sind mit vertikaler Drehachse angeordnet. Sie werden mit einer der Fördergeschwindigkeit entsprechenden Umfangsgeschwindigkeit angetrieben. Der Spalt zwischen den Schaumgummiwalzen 6 entspricht der Querabmessung der Gegenstände 1. Die Schaumgummiwalzen 6 sind so angeordnet, dass die Mitte des Spaltes mit der Grenzlinie zwischen den Abfuhrförderern 3a, 3b zusammenfällt.

Bei dem Ausführungsbeispiel von Fig. 1 fungiert ein und derselbe Förderer oberhalb der Schaumgummiwalzen 6 als Zufuhrförderer 5, während er unterhalb derselben als Abfuhrförderer 3a fungiert. Der andere Abfuhrförderer 3b beginnt etwas oberhalb der Schaumgummiwalzen 6. Durch ein Geländer 10 und die Schaumgummiwalzen 6 werden die Gegenstände 1 von der Mitte des Zufuhrförderers auf die Grenzlinie zwischen den beiden Abfuhrförderern 3a, 3b verschoben. Die beiden Abfuhrförderer 3a, 3b haben selbstverständlich gleiche Geschwindigkeit.

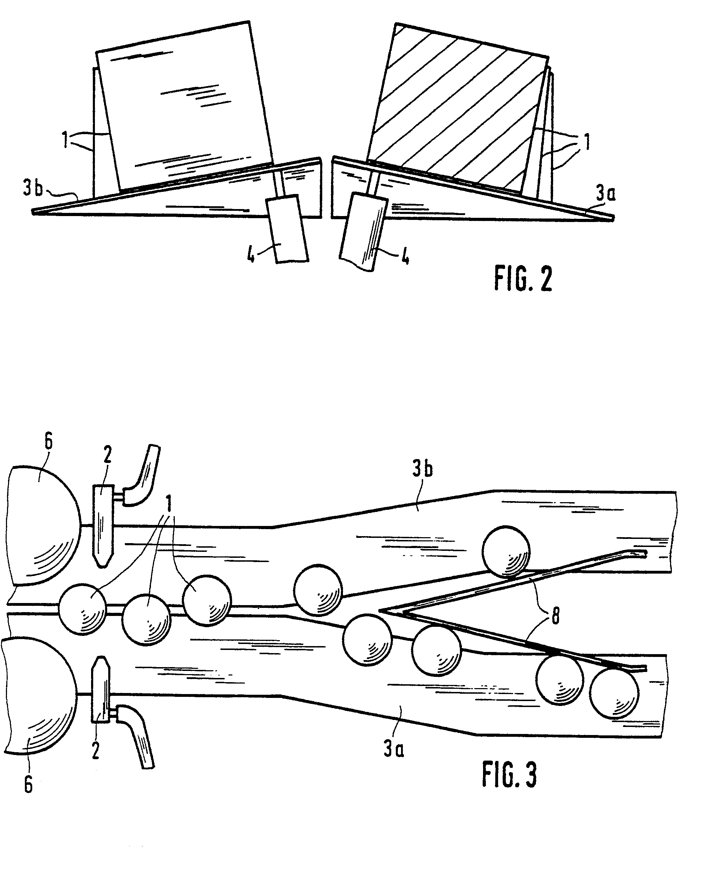

Von beiden Abfuhrförderern 3a, 3b getragen, wandern die Gegenstände 1 dann zwischen einer Versetzeinrichtung in Form von zwei Gasdüsen 2 hindurch. Je nachdem, auf welchem Abfuhrförderer die Gegenstände weitertransportiert werden sollen, werden die Gegenstände durch einen Gasstrahl der einen oder der anderen Gasdüse seitlich etwas versetzt, so dass ihr Schwerpunkt nun nicht mehr auf die Grenzlinie zwischen beiden Abfuhrförderern, sondern auf den Randbereich eines der beiden Abfuhrförderer fällt. Die endgültige Verschiebung der Gegenstände 1 in die Mitte eines der beiden Abfuhrförderer erfolgt in dem Kippbereich 7. Dieser ist in Fig. 2 im Schnitt dargestellt. Die beiden Abfuhrförderer 3 (3a, 3b) sind hier seitlich nach unten geneigt, d. h. an ihrer Grenzlinie überhöht. Die Neigung beträgt in dem vorliegenden Ausführungsbeispiel etwa 10 % und reicht aus, damit die Gegenstände durch ihre eigene Schwerkraft in die Mitte der Abfuhrförderer 3 (3a, 3b) rutschen. Nach dem gekippten Bereich 7 ist die Transportfläche der Abfuhrförderer 3a, 3b wieder waagrecht angeordnet.

Bei der in Fig. 3 gezeigten Ausführungsform besteht bezüglich des Zufuhrsförderers 5 und der Versetzeinrichtung 2 kein Unterschied zu der in Fig. 1 gezeigten Ausführungsform. Die seitliche Neigung der Abfuhrförderer 3a, 3b im gekippten Bereich 7 ist jedoch geringer, und es wird nicht angestrebt, dass die Gegenstände 1 infolge der Neigung der Abfuhrförderer quer zur Transportrichtung seitlich rutschen. Die Neigung hat hier nur die Aufgabe, die durch die Versetzeinrichtung 2 z. B. auf den Abfuhrförderer 3a versetzten Gegenstände 1 ausser Kontakt mit dem anderen Abfuhrförderer 3b zu bringen. Die Neigung braucht also nur so gross zu sein, dass die Gegenstände von dem jeweils anderen Abfuhrförderer abheben. Noch innerhalb des gekippten Bereiches 7 werden die Abfuhrförderer 3a, 3b auf einer auseinanderlaufenden Bahn geführt, so dass sich die Bewegungsbahnen der auf den beiden Abfuhrförderern transportierten Gegenstände nicht mehr überlappen. Es genügt dazu z. B., dass zwischen den Abfuhrförderern ein Abstand gleich der Querabmessung der Gegenstände hergestellt wird. Durch ein Führungsgeländer 8 oder durch weitere Schaumgummiwalzen können die Gegenstände dann zur Mitte der jeweiligen Abfuhrförderer verschoben werden.

Es sind auch Kombinationen der in Fig. 1 und Fig. 3 gezeigten Ausführungsformen denkbar, so dass die Gegenstände im gekippten Bereich 7 aufgrund der Schwerkraft etwas seitlich rutschen und andererseits durch ein Führungsgeländer 8 oder Schaumgummiwalzen oder dergleichen zusätzlich verschoben werden.

Bei der in Fig. 1 gezeigten Ausführungsform kann das seitliche Rutschen der Gegenstände im gekippten Bereich 7 dadurch unterstützt werden, dass in diesem Bereich die Abfuhrförderer 3a, 3b durch Vibratoren in Schwingungen kurzer Amplitude versetzt werden, dadurch fällt es den Gegenständen 1 leichter, die Haftreibung zu überwinden und seitlich zu rutschen. Diese Vibratoren 4 sind in Fig. 2 schematisch dargestellt.

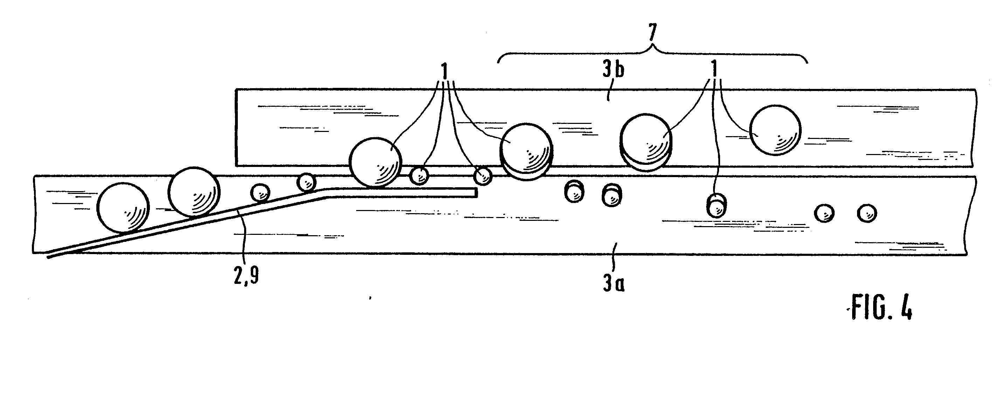

Eine besonders einfache Ausführungsform ergibt sich, wenn Getränkeflaschen nur nach ihrem Durchmesser sortiert werden sollen. In einem solchen Fall kann die Versetzeinrichtung 2 aus einem einfachen Führungsgeländer 9 bestehen, das in einem bestimmten Abstand von der Grenzlinie zwischen beiden Abfuhrförderern endet. Dieser Abstand ist so bemessen, dass er grösser ist als der Radius der kleinen Flaschen und kleiner als der Radius der grossen Flaschen. In Fig. 4 ist dies veranschaulicht. Man erkennt, dass infolge dieses Abstandes des Führungsgeländers 9 von der Grenzlinie zwischen den Abfuhrförderern der Schwerpunkt der kleinen Flaschen oder Dosen auf den Abfuhrförderer 3a fällt, während der Schwerpunkt der grossen Dosen oder Flaschen auf den Abfuhrförderer 3b fällt. Ohne zusätzliche Versetzeinrichtung werden die Flaschen oder Dosen demnach in Abhängigkeit von ihrem Durchmesser auf unterschiedliche Abfuhrförderer gesetzt.

Nicht dargestellt in der Zeichnung ist die Einrichtung, die das Merkmal bestimmt, in Abhängigkeit von dem die Gegenstände auf den einen oder den anderen Abfuhrförderer gesetzt werden. Derartige Einrichtungen sind allgemein bekannt und dienen z. B. zum Feststellen der Farbe, der Füllhöhe, des Gewichts, des Verschlusses usw.. Das Ausgangssignal dieser Einrichtung steuert die Versetzeinrichtung 2. Da die Kontrolleinrichtung im allgemeinen vor der Versetzeinrichtung angeordnet ist, wird das Signal der Kontrolleinrichtung um eine Zeitspanne verzögert, die sich aus dem Abstand zwischen Kontrolleinrichtung und Versetzeinrichtung und der Fördergeschwindigkeit ergibt.

**Patentansprüche**

1. Vorrichtung zum Verteilen von Gegenständen von einem Zufuhrförderer (5) auf zwei oder mehrere Abfuhrförderer (3) in Abhängigkeit von bestimmten Merkmalen der Gegenstände mit einer Einrichtung (2) zum wahlweisen Versetzen der Gegenstände quer zur Förderrichtung, wobei die Abfuhrförderer im wesentlichen waagrechte, sich bewegende Förderflächen aufweisen, dadurch gekennzeichnet, daß die Gegenstände (1) so zugeführt werden, daß sie spätestens bei der Versetzeinrichtung (2) auf beiden Abfuhrförderern (3) zu stehen kommen und daß die beiden Abfuhrförderer (3) bei oder unterhalb der Versetzeinrichtung (2) eine bestimmte Strecke dachartig gegeneinander gekippt sind.

2. Vorrichtung nach Anspruch 1, dadurch gekennzeichnet, dass die Gegenstände (1) so zugeführt werden, dass ihr Schwerpunkt zwischen die beiden Abfuhrförderer (3) fällt und dass die Versetzeinrichtung (2) die Gegenstände in Abhängigkeit von dem bestimmten Merkmal geringfügig in Richtung auf einen der beiden Abfuhrförderer (3) quer zur Förderrichtung versetzt.

3. Vorrichtung nach Anspruch 1, dadurch gekennzeichnet, dass die Gegenstände (1) so zugeführt werden, dass ihr Schwerpunkt auf den Randbereich eines der beiden Abfuhrförderer (3) fällt und die Versetzeinrichtung (2) die nach dem bestimmten Merkmal ausgewählten Gegenstände geringfügig quer zur Förderrichtung versetzt, so dass deren Schwerpunkt auf den Randbereich des anderen Abfuhrförderers fällt.

4. Vorrichtung nach einem der Ansprüche 1 bis 3, gekennzeichnet durch eine Vibrationseinrichtung (4), die die Abfuhrförderer in deren gekippten Bereich in Vibration versetzt.

5. Vorrichtung nach einem der Ansprüche 1 bis 4, dadurch gekennzeichnet, dass die Abfuhrförderer (3) im gekippten Bereich auseinanderlaufen.

**Claims**

1. An apparatus for distributing articles from a feed conveyor (5) to two or more discharge conveyors (3) in response to certain features of said articles, comprising a means (2) for selectively displacing said articles transversely of the direction of advance, said discharge conveyors having substantially horizontal conveying surfaces, characterised in that the articles (1) are so advanced that at the latest at the displacing means (2) they come to stand on both discharge conveyors (3) and that at or downstreams of the displacing means (2) the two discharge conveyors (3) are inclined relative to each other in the manner of a roof along a certain length of way.

2. Apparatus according to claim 1, characterised in that the articles (1) are so advanced that their centre of gravity lies between the two discharge conveyors (3), and that in response to said certain feature the displacing means (2) slightly displaces the articles toward one of the two discharge conveyors (3) in a direction transversaly of the direction of. advance.

3. Apparatus according to claim 1, characterised in that the articles (1) are so advanced that their centre of gravity lies in the marginal region of one of the two discharge conveyors (3), and the displacing means (2) slightly displaces the articles selected according to said certain feature transversely of the direction of advance so that the centre of gravity thereof lies in the marginal region of the other discharge conveyor.

4. Apparatus according to one of claims 1 to 3, characterised by a vibration means (4) causing the discharge conveyors to vibrate in the tilted region thereof.

5. Apparatus according to one of claims 1 to 4, characterised in that the discharge conveyors (3) diverge in the tilted region thereof.

**Revendications**

1. Equipement pour répartir des objets, d'un transporteur d'amenée (5) sur au moins deux transporteurs d'évacuation (3), en fonction de certaines caractéristiques des objets, avec un dispositif (2) destiné à décaler à volonté les objets perpendiculairement à la direction de transport, les transporteurs d'évacuation présentant des surfaces de transport mobiles essentiellement horizontales, caractérisé en ce que les objets (1) sont amenés de façon à se retrouver sur les deux transporteurs d'évacuation (3) au plus tard au niveau du dispositif de décalage (2), et que les deux transporteurs d'évacuation (3) sont inclinés l'un par rapport à l'autre, en faisant un toit, sur une certaine distance au niveau ou en-dessous du dispositif de décalage (2).

2. Equipement selon la revendication 1, caractérisé en ce que les objets (1) sont amenés de façon que leur centre de gravité tombe entre les deux transporteurs d'évacuation (3), et que le dispositif de décalage décale un peu les objets, en fonction de la caractéristique ainsi définie, dans la direction de l'un des deux transporteurs d'évacuation (3), et perpendiculairement à la direction du transport.

3. Equipement selon la revendication 1, caractérisé en ce que les objets (1) sont amenés de façon que leur centre de gravité tombe sur la zone marginale de l'un des deux transporteurs d'évacuation (3), et que le dispositif de décalage (2) déplace un peu, perpendiculairement à la direction de transport, les objets sélectionnés en fonction de la caractéristique ainsi définie, de façon que leur centre de gravité tombe sur la zone marginale de l'autre dispositif d'évacuation.

4. Equipement selon l'une des revendications 1 à 3, caractérisé par un dispositif à vibrations (4), qui décale à l'aide de vibrations les transporteurs d'évacuation, dans leur zone inclinée.

5. Equipement selon l'une des revendications 1 à 4, caractérisé en ce que les transporteurs d'évacuation (3) s'écartent l'un de l'autre dans la zone inclinée.

FIG. 1

FIG. 2

FIG. 3

FIG. 4

0 121 106